# EUROPÄISCHE PATENTANMELDUNG

(11) **EP 2 574 603 A1**
(43) Veröffentlichungstag der Anmeldung: **03.04.2013**
(21) Anmeldenummer: 12155951.2
(22) Anmeldetag: 17.02.2012
(51) Int. Cl.: C04B 35/565, C22C 38/02, C22C 38/18, C22C 38/34, F16C 33/00

(54) **Keramikelement, Verfahren zur Herstellung eines Keramikelements, Ausgangsstoff und Verfahren zum Herstellen des Ausgangsstoffs**

(30) Priorität: 30.09.2011 DE 102011083860
(71) Anmelder: Aktiebolaget SKF, 41 550 Göteborg (SE)
(72) Erfinder: Weiglein, Juergen, 97714 Oerlenbach (DE); Faltus, Barbara, 97469 Gochsheim (DE); Gegner, Dr. Jürgen, 91301 Forchheim (DE); Velde, Henryk, 97440 Werneck (DE); Hofmann, Joachim, 97456 Dittelburg (DE); Herbst, Hubert, 97503 Gädheim (DE); Greil, Prof. Peter, 91085 Weisendorf (DE); Schlier, Lorenz, 91052 Erlangen (DE); Travitzky, Nahum, 90409 Nürnberg (DE)
(74) Vertreter: Schonecke, Mitja

(57) **Zusammenfassung**

Die Erfindung geht aus von einem Keramikelement (10), insbesondere einem Keramiklagerelement.

Es wird vorgeschlagen, dass 30 bis 70 Volumenprozent des Keramikelements (10) aus FeSiCr bestehen.

## Beschreibung

Die Erfindung geht aus von einem Keramikelement nach dem Oberbegriff des Anspruchs 1.

Aus den Patentschriften DE 101 54 739 B4 und EP 1 331 211 B1 sind Keramiklagerelemente und Verfahren zu deren Herstellung bekannt.

Die Aufgabe der Erfindung besteht insbesondere darin, ein gattungsgemäßes Keramikelement mit einer hohen Benutzbarkeitsdauer bereitzustellen. Die Aufgabe wird erfindungsgemäß durch die Merkmale des Patentanspruchs 1 und die Merkmale des Nebenanspruchs gelöst, während vorteilhafte Ausgestaltungen und Weiterbildungen der Erfindung den Unteransprüchen entnommen werden können.

Die Erfindung geht aus von einem Keramikelement, insbesondere einem Keramiklagerelement.

Es wird vorgeschlagen, dass 30 bis 70 Volumenprozent des Keramikelements aus FeSiCr bestehen. Unter einem "Lagerelement" sollen insbesondere Elemente mit Laufflächen von Wälz- oder Gleitlagern, wie insbesondere Außen- oder Innenringe, Wälzkörper und Wälzkörperkäfige verstanden werden. Mit einer erfindungsgemäßen Ausgestaltung kann eine hohe Benutzbarkeitsdauer erreicht werden. Insbesondere kann eine vorteilhafte Kombination aus einer hohen Härte, Zähigkeit, Festigkeit und Verschleißfestigkeit erreicht werden. Im Besonderen kann das Keramikelement ein Nocken einer Nockenwelle, ein Zahnrad oder eine Verzahnung sein. Ferner wird vorgeschlagen, dass Null bis 25 Volumenprozent des Keramikelements aus SiC bestehen. Dadurch kann eine hohe Härte des Keramikelements erreicht werden, welche vorteilhaft für eine besonders hohe Benutzbarkeitsdauer des Keramikelements ist.

Vorzugsweise bestehen 30 bis 45 Volumenprozent des Keramikelements aus Siliziumoxycarbid. Auf diese Weise kann eine lange Gebrauchsdauer und insbesondere eine hohe Härte des Keramikelements erreicht werden.

Mit Vorteil weist das Keramikelement wenigstens eine Durchgangsöffnung auf. Hierdurch kann eine flexible Verwendbarkeit erreicht werden. Insbesondere kann erreicht werden, dass das Keramikelement als Wälzlagerkäfig ausgebildet sein kann.

Außerdem wird vorgeschlagen, dass eine durchschnittliche Volumenkonzentration wenigstens eines Stoffes des Keramikelements in dem Keramikelement räumlich variiert. Mit anderen Worten kann bei einem Keramikelement gemäß einem Ausführungsbeispiel eine durchschnittliche Volumenkonzentration wenigstens eines Stoffs des Keramikelements in dem Keramikelement räumlich varüeren. Unter einer "durchschnittliche Volumenkonzentration" eines Stoffes soll insbesondere die Volumenkonzentration des Stoffes gemittelt über wenigstens eine Kugel mit einem Radius von 0,3 cm, vorzugsweise 1 cm und besonders bevorzugt 5 cm verstanden werden. Dadurch kann eine bedarfsangepasste Bauweise erreicht werden. Insbesondere kann erreicht werden, dass bei einer Ausbildung des Keramikelements als Keramiklagerelement eine Lauffläche des Keramiklagerelement eine hohe Härte aufweist und ein Bereich des Keramiklagerelements, welcher beabstandet von der Lauffläche angeordnet ist, gute Dämpfungseigenschaften und eine geringere Härte als die Lauffläche aufweist.

Des Weiteren wird eine Vorrichtung mit dem Keramikelement vorgeschlagen, wobei die Vorrichtung wenigstens ein Bauelement aufweist, welches wenigstens teilweise frei von Keramik ist und welches einstückig mit dem Keramikelement ausgebildet ist. Darunter, dass das Keramikelement "einstückig" mit dem Bauelement ausgebildet ist, soll insbesondere verstanden werden, dass das Bauelement und das Keramikelement aus einem Guss und/oder aus einer Spritzung sind und/oder nur unter einer irreversiblen Zerstörung einer zwischen dem Bauelemente und dem Keramikelement bestehenden Verbindung voneinander trennbar sind. Dadurch kann eine stabile und zugleich kostengünstige Bauweise erreicht werden.

Vorzugsweise ist das Keramikelement als Lagerinnenring ausgebildet und das Bauelement ist ein Trägerelement, mittels welchem der Lagerinnenring an einer Welle der Vorrichtung befestigt ist. Unter einem "Trägerelement" soll insbesondere ein Element verstanden werden, welches wenigstens einen Teil der Gewichtskraft des Lagerinnenrings aufnimmt und an die Welle überträgt, wobei sich das Element vorzugsweise von Klebstoff unterscheidet. Hierdurch kann eine sichere Befestigung des Lagerinnenrings erreicht werden. Im Besonderen kann eine Dämpfung von Stößen durch das Trägerelement erreicht werden.

Weiterhin wird ein Verfahren zur Herstellung eines Keramikelements vorgeschlagen, bei welchem der Ausgangsstoff, welcher durch das Verfahren zu dem Keramikelement verarbeitet wird, zu 20 bis 60 Volumenprozent aus FeSiCr besteht. Auf diese Weise kann eine hohe Benutzbarkeitsdauer erreicht werden. Insbesondere kann eine vorteilhafte Kombination aus einer hohen Härte, Zähigkeit, Festigkeit und Verschleißfestigkeit erreicht werden. Vorzugsweise besteht der Ausgangsstoff zu 22 bis 45 Volumenprozent aus FeSiCr, wodurch eine besonders hohe Langlebigkeit erreicht wird.

Vorzugsweise besteht der Ausgangsstoff zu Null bis 25 Volumenprozent aus SiC. Dadurch kann eine Härte des Keramikelements erreicht werden, welche vorteilhaft für eine besonders hohe Benutzbarkeitsdauer des Keramikelements ist. Bevorzugt besteht der Ausgangsstoff zu 7 bis 20 Volumenprozent aus SiC, wodurch eine besonders gebrauchsangepasste Härte erzielt werden kann.

Mit Vorteil besteht der Ausgangsstoff zu 35 bis 70 Volumenprozent aus einem Silikonharz. Hierdurch kann eine lange Gebrauchsdauer und insbesondere eine hohe Härte des Keramikelements erreicht werden. Vorzugsweise besteht der Ausgangsstoff zu 50 bis 65 Volumenprozent aus dem Silikonharz, wodurch hohe Bindungskräfte innerhalb des Keramikelements erreicht werden können.

In einer bevorzugten Ausgestaltung der Erfindung ist der Ausgangsstoff frei von Katalysatoren. Unter einem "Katalysator" soll insbesondere ein Stoff verstanden werden, welcher die Herstellung des Keramikelements beschleunigt, ohne dabei selbst verbraucht zu werden. Dadurch kann ein qualitativ hochwertiges, homogenes und zugleich kostengünstiges Keramikelement hergestellt werden.

Vorzugsweise wird der Ausgangsstoff zunächst geschmolzen und danach extrudiert oder durch Spritzgießen weiterverarbeitet oder durch Pressen mit gleichzeitiger und von mehreren Seiten erfolgenden Wärmeübertragung auf den geschmolzenen Ausgangsstoff weiterverarbeitet. Auf diese Weise kann eine effiziente Herstellung erreicht werden.

Ferner wird vorgeschlagen, dass zur Herstellung einer Einheit mit einem Keramikelement zunächst das Keramikelement durch das Verfahren hergestellt wird und anschließend ein Kunststoffelement an das Keramikelement angespritzt wird. Dadurch kann eine einfache und kostengünstige Herstellung erreicht werden.

Ein Ausgangsstoff gemäß einem Ausführungsbeispiel zum Herstellen eines solchen Keramikelements gemäß einem Ausführungsbeispiel umfasst im Durchschnitt 20 bis 60 Volumenprozent FeSiCr, bis zu 25 Volumenprozent SiC und 35 bis 70 Volumenprozent eines Kunststoffs, beispielsweise eines Silikonharzes oder eines Methylsilikonharzes, wobei der Ausgangsstoff in Form eines Granulats vorliegt. Hierdurch kann es möglich sein, eine Herstellung des Keramikelements zu vereinfachen, da der Ausgangsstoff bereits in granularer Form vorliegt. Hierdurch kann gegebenenfalls ein Herstellen bzw. Bereitstellen des Ausgangsstoffs während der Fertigung vermieden werden, was eine Gefahr von Abweichungen und anderen Variationen von einer beabsichtigten und/oder spezifizierten Zusammensetzung des Ausgangsstoffs aufgrund technischer oder anderer Ungenauigkeiten unwahrscheinlicher macht. Es kann somit hierdurch gegebenenfalls eine höhere Ausbeute erzielbar sein. Ergänzend oder alternativ kann auch ein Ausführungsbeispiel eines Verfahrens zur Herstellung eines solchen Keramikelements vereinfacht werden.

Hierbei wird unter einem Granulat grundsätzlich jede pulver- oder granulatförmige Substanz, also jede feste Substanz verstanden, die in Körnern vorliegt. Hierbei wird gegebenenfalls ein Pulver von einem Granulat im engeren Sinne dadurch unterschieden, dass bei einem Pulver eine durchschnittliche Korngröße eine maximale Korngröße bzw. eine vorbestimmte maximale Korngröße nicht überschreitet. So kann es sich hierbei je nach konkreter Implementierung beispielsweise um eine maximale Korngröße von 500 µm, 300 µm, 100 µm, 50µm oder 20 µm handeln. Liegen die durchschnittlichen Korngrößen über einem der vorgenannten Werte, also beispielsweise bei Werten von wenigstens 20 µm, 50 µm, 100 µm, 300 µm oder 500 µm, kann hierunter ein Granulat im engeren Sinn verstanden werden. Es können jedoch auch größere als die vorgenannten Korngrößen verwendet werden. Beispielsweise kann ein Granulat eine - beispielsweise mittlere - Granulatkorngröße im Bereich zwischen 500 µm und 50 mm, oder auch zwischen 1 mm und 20 mm aufweisen.

Bei einem Ausgangsstoff gemäß einem Ausführungsbeispiel kann im Wesentlichen jedes Korn des Granulats FeSiCr, SiC und den Kunststoff umfassen. Dies kann beispielsweise dadurch sichergestellt werden, dass die zuvor genannten Substanzen FeSiCr und SiC in Pulverform in jedem der Granulatkörner umfasst sind. Selbstverständlich kann es aufgrund von statistischen Abweichungen hierbei durchaus dazu kommen, dass gegebenenfalls einzelne Körner des Granulats FeSiCr und/oder SiC nicht umfassen. Dadurch, dass das FeSiCr und das SiC in Pulverform vorliegt, also eine geringere maximale Korngröße als das Granulat aufweist, umfasst so im statistischen Mittel über eine Vielzahl von Körnern jedes Korn im Mittel die betreffenden Inhaltsstoffe bzw. Stoffe in der spezifizierten Konzentration.

Ein Verfahren gemäß einem Ausführungsbeispiel zum Herstellen des Ausgangsstoffs in Form eines Granulats umfasst ein Bereitstellen eines im Wesentlichen homogen durchmischten Gemenges, welches FeSiCr und SiC in granularer Form mit einer vorbestimmten maximalen Korngröße umfasst, das in einem Kunststoff, beispielsweise einem Silikonharz oder einem Methylsilikonharz, in einer fließfähigen Form aufgenommen ist. Es umfasst ferner ein Umwandeln des in der flüssigen Form des Kunststoffs aufgenommenen Gemenges in das Granulat mit einer vorbestimmten Granulatkorngröße, die die vorbestimmte maximale Korngröße übersteigt. Die granulare Form, in der das FeSiCr und das SiC bereitgestellt werden, kann hierbei also beispielsweise eine Pulver- bzw. Granulatform mit den zuvor spezifizierten vorbestimmten maximalen Korngrößen sein. Im Unterschied hierzu wird das Granulat mit einer Granulatkorngröße bereitgestellt bzw. in dieses umgewandelt, wobei die Granulatkorngröße die entsprechenden bereits zuvor definierten Werte annehmen bzw. übersteigen kann.

Einem Verfahren gemäß einem Ausführungsbeispiel zum Herstellen des Ausgangsstoffs in Form eines Granulats liegt so die Erkenntnis zugrunde, dass das FeSiCr und das SiC typischerweise erst bei deutlich höheren Temperaturen eine Phasenumwandlung oder auch eine chemische Umwandlung erfährt, als dies im Falle der entsprechenden Kunststoffe der Fall ist. So kann zunächst das FeSiCr und das SiC in eine entsprechende Form umgewandelt werden, sodass die vorbestimmte maximale Korngröße dieser beiden Substanzen vorliegt, soweit dies notwendig sein sollte. Dies kann beispielsweise durch ein Mahlen oder ein andersgeartetes Zerkleinern von den entsprechenden Substanzen erfolgen. Durch ein leichtes Erwärmen des Kunststoffs, sodass dieser die fließfähige Form erreicht, kann das im Wesentlichen homogen durchmischte Gemenge der beiden zuvor genannten Substanzen in dem fließfähigen Kunststoff aufgenommen werden. Dieser kann beispielsweise ausgekühlt und dadurch wenigstens teilweise verfestigt werden. Durch ein Mahlen, Zerhäckseln, Zerhacken oder durch ein anderes Zerkleinern, gegebenenfalls auch durch ein Pressen durch eine Pressform, kann dieser dann in ein Granulat mit der vorbestimmten Granulatkorngröße gebracht werden. Bei dem Bereitstellen des FeSiCr und des SiC mit der vorbestimmten maximalen Korngröße kann gegebenenfalls darauf geachtet werden, dass die vorbestimmte maximale Korngröße bereits kleiner als die Granulatkorngröße ist.

Bei einem Ausführungsbeispiel eines Verfahrens zum Herstellen des Ausgangsstoffs in Form des Granulats kann so beispielsweise die Granulatkorngröße die vorbestimmte maximale Korngröße wenigstens um einen Faktor 2, wenigstens um einen Faktor 5, wenigstens um einen Faktor 10, wenigstens um einen Faktor 20, wenigstens um einen Faktor 50 oder wenigstens um einen Faktor 100 übersteigen. Das FeSiCr und das SiC kann hierbei gegebenenfalls durch ein entsprechendes Mahlen oder anderes Zerkleinern und einem gegebenenfalls optionalen Filtern hinsichtlich der Korngrößen in die entsprechende Größe versetzt werden.

An dieser Stelle sei darauf hingewiesen, dass ein Anteil von bis zu 25 Volumenprozent SiC ebenfalls die Alternative umfasst, dass überhaupt kein SiC in dem Ausgangsstoff enthalten ist. Die Alternative, bis zu 25 Volumenprozent SiC vorzusehen, umfasst also insbesondere auch ein völliges Fehlen bzw. einen Anteil von 0 Volumenprozent.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt einen Teil eines Teilschnitts durch eine Vorrichtung mit einem erfindungsgemäßen Keramikelement,
Fig. 2 zeigt eine schematische Darstellung eines Verfahrens zur Herstellung des Keramikelements, und
Fig. 3 zeigt ein Flussdiagramm eines Verfahrens zum Herstellen des Ausgangsstoffs in Form eines Granulats.

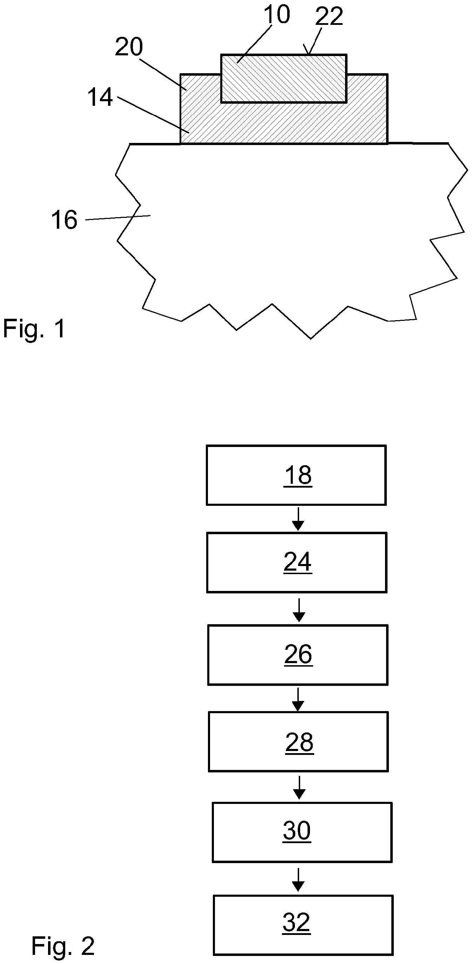

Figur 1 zeigt einen Teil eines Teilschnitts durch eine Vorrichtung mit einem erfindungsgemäßen Keramikelement 10, welches als Lagerinnenring eines Wälzlagers ausgebildet ist. Fünfundvierzig Volumenprozent des Keramikelements 10 bestehen aus FeSiCr, fünfzehn Volumenprozent des Keramikelements 10 bestehen aus SiC und 35 Volumenprozent des Keramikelements 10 bestehen aus Siliziumoxycarbid. Fünf Volumenprozente des Keramikelements 10 sind weitere Bestandteile, insbesondere Silizide. Durchschnittliche Volumenkonzentrationen von FeSiCr, SiC und Siliziumoxycarbid sind innerhalb des Keramikelements 10 konstant. Alternativ hierzu kann eine durchschnittliche Volumenkonzentration von SiC in einem ersten Bereich des Keramikelements 10, welcher einen größeren Abstand von einer Lauffläche 22 des als Lagerinnenring ausgebildeten Keramikelements 10 aufweist als ein zweiter Bereich des Keramikelements 10, kleiner sein als in dem zweiten Bereich, so dass der zweite Bereich härter ist als der erste Bereich.

Ferner weist die Vorrichtung ein als Trägerelement ausgebildetes Bauelement 14 auf, welches auf eine Welle 16 der Vorrichtung aufgepresst ist. Das Keramikelement ist mittels des Bauelements 14 an der Welle 16 befestigt. Hierzu ist das Bauelement 14 an das Keramikelement 10 angespritzt, wodurch das Bauelement 14 nur unter Zerstörung von dem Keramikelement 10 trennbar ist. Das Bauelement 14 besteht aus Polyamid. Die Vickershärte HV(10) des Keramikelements 10 liegt zwischen 8 und 14 Gigapascal.

Alternativ ist denkbar, dass das Keramikelement 10 als durchbohrter Wälzkörper oder Wälzkörper-Käfig ausgebildet ist.

Bei einem Verfahren zur Herstellung eines erfindungsgemäßen Keramikelements werden zunächst ein erstes Granulat, welches aus FeSiCr besteht, ein zweites Granulat, das aus SiC besteht, und ein drittes Granulat zu einer homogenen Mischung vermischt, welche den Ausgangsstoff 18 bildet (Figur 2). Statt jedem der Granulate kann auch ein Pulver verwendet werden. Das dritte Granulat besteht aus einem lösemittelfreien, festen Methylsiliconharz, welches in einem Temperaturbereich von 35-55°C schmilzt und ab einer Temperatur von 350°C thermisch zersetzt wird. Der Ausgangsstoff 18, der durch das Verfahren zu dem Keramikelement verarbeitet wird, besteht zu vierzig Volumenprozent aus FeSiCr, zu 10 Volumenprozent aus SiC und zu 50 Volumenprozent aus dem genannten Methylsilikonharz. Der Ausgangsstoff 18 ist frei von Katalysatoren.

Der so bereitgestellte Ausgangsstoff 18 kann so beispielsweise in Granulatform vorliegen, bei dem jedoch die entsprechenden Bestandteile gegebenenfalls nicht alle in einem Granulatkorn vorliegen. Der so hergestellte bzw. bereitgestellte Ausgangsstoff kann daher gegebenenfalls auch als Granulatgemenge bezeichnet werden.

Gemäß einem Ausführungsbeispiel kann jedoch auch der Ausgangsstoff 18 unmittelbar in granularer Form, also in Form eines Granulats, bereitgestellt werden, bei dem die Körner des Granulats im Durchschnitt 20 bis 60 Volumenprozent FeSiCr, bis zu 25 Volumenprozent SiC und 35 bis 70 Volumenprozent eines Kunststoffs, also beispielsweise des Silikonharzes oder des Methylsilikonharzes umfassen. Selbstverständlich kann auch hier wiederum ein Anteil der betreffenden Stoffe und Komponenten in den zuvor genannten, engeren Grenzen liegen. So kann beispielsweise der Kunststoff, also beispielsweise das Silikonharz bzw. das Methylsilikonharz, mit einem Anteil von 50 bis 65 Volumenprozent vorliegen, während das FeSiCr mit einem Anteil von 22 bis 45 Volumenprozent und das SiC mit einem Anteil von 7 bis 20 Volumenprozent vorliegen kann. Wie zuvor erläutert wurde, kann hierdurch gegebenenfalls eine besonders hohe Langlebigkeit und/oder eine besonders gebrauchsangepasste Härte erzielbar sein.

An dieser Stelle sei darauf hingewiesen, dass ein Anteil von bis zu 25 Volumenprozent SiC ebenfalls die Alternative umfasst, dass überhaupt kein SiC in dem Ausgangsstoff enthalten ist. die Alternative bis zu 25 Volumenprozent SiC vorzusehen, umfasst also insbesondere auch ein völliges Fehlen bzw. einen Anteil von 0 Volumenprozent.

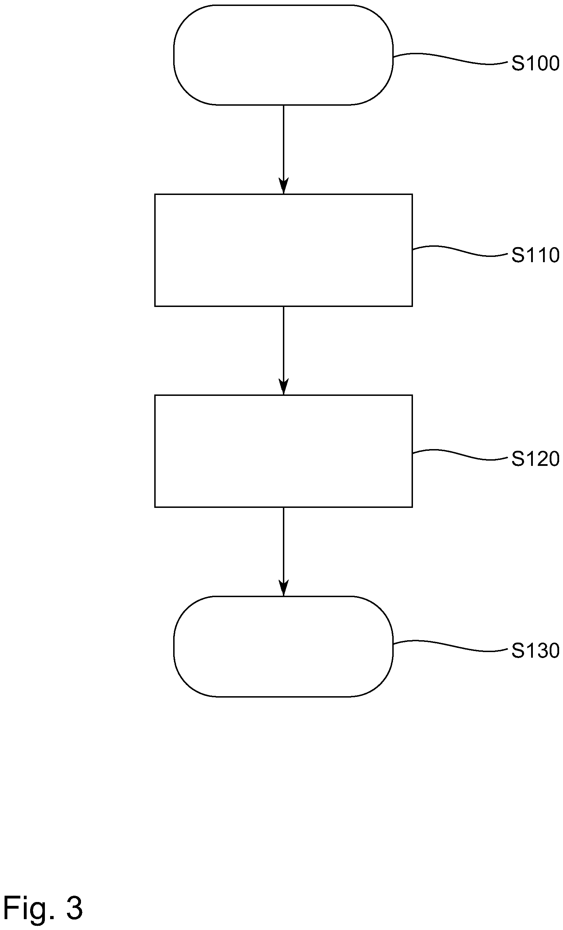

Wie in Fig. 3 dargestellt ist, kann der Ausgangsstoff 18 in granularer Form beispielsweise auch derart hergestellt werden, dass im Wesentlichen in jedem Korn des Granulats das FeSiCr, das SiC und der betreffende Kunststoff vorliegen. Hierbei kann es aufgrund von statistischen oder anderen Abweichungen dazu kommen, dass gegebenenfalls nicht jedes Korn des Granulats alle Komponenten desselben umfasst. An dieser Stelle kommt es nur darauf an, dass im Durchschnitt die spezifizierten Volumenprozente über eine Vielzahl bzw. alle Körner des Granulats vorliegen und dass zumindest nicht eine signifikante Anzahl der Körner, also beispielsweise nicht mehr als 20 %, bei anderen Ausführungsbeispielen gegebenenfalls nicht mehr als 10 % oder nicht mehr als 5 % frei von wenigstens einer der spezifizierten Komponenten ist, sofern diese - wie im Fall des SiC - nicht vollständig fehlen kann.

Das Granulat des Ausgangsstoffs 18 gemäß einem Ausführungsbeispiel kann so beispielsweise mit Hilfe eines Verfahrens hergestellt werden, wie es in Fig. 3 im Rahmen eines Flussdiagramms dargestellt ist. Nach einem Start des Verfahrens in Schritt S 100 wird zunächst in einem Schritt S110 ein Gemenge des FeSiCr und des SiC in einer im Wesentlichen homogen durchmischten Form mit einer vorbestimmten maximalen Korngröße bereitgestellt, welches in einer fließfähigen Form des Kunststoffs aufgenommen ist. Zu diesem Zweck kann beispielsweise das FeSiCr und gegebenenfalls das SiC - sofern dies vorgesehen ist - bereits in Pulverform eingebracht werden, gegebenenfalls jedoch auch im Rahmen eines Mahlens, Zerkleinerns und eines optionalen Filters auf die entsprechenden Korngrößen gebracht werden. Dann kann im Rahmen des Schritts S110 beispielsweise das FeSiCr und das SiC in der Pulverform miteinander vermengt werden, bevor es in dem fließfähigen Kunststoff aufgenommen wird.

Zum Aufnehmen des Gemenges in dem fließfähigen Kunststoff kann dieser beispielsweise auf eine Temperatur erhitzt werden, in der der Kunststoff fließfähig wird. Im Falle von Methylsilikonharz tritt das Schmelzen desselben bereits bei Temperaturen zwischen 35°C und 55°C auf.

Im Rahmen eines Schritts S120 kann dann das in der fließfähigen Form des Kunststoffs aufgenommene Gemenge in das Granulat mit der vorbestimmten Granulatkorngröße umgewandelt werden, wobei die Granulatkorngröße die vorbestimmte maximale Korngröße in der beschriebenen Art und Weise übersteigt. Dies kann beispielsweise dadurch geschehen, dass der fließfertige Kunststoff, in dem das Gemenge aufgenommen ist, in einer Form abgekühlt wird. Ebenso kann dieses auch durch ein Pressen durch eine Matrize oder ein anderes Werkzeug zu einem Festkörper mit makroskopischen Abmessungen geformt wird, der dann beispielsweise im Rahmen eines Zerkleinerungsprozesses, begleitet optional von einem Filtern, in das entsprechende Granulat überführt wird. Das Verfahren endet typischerweise in einem Schritt S 130.

In einem weiteren Verfahrensschritt findet eine Formgebung 24 für den Ausgangsstoff 18 statt. Dazu wird der Ausgangsstoff 18 durch erhitzen zum Schmelzen gebracht und hierdurch in einen thermoplastischen Zustand überführt. Nachfolgend wird aus dem Ausgangsstoff 18 eine homogene Masse hergestellt. Die homogene Masse kann durch Extrudieren hergestellt werden, wobei durch Anpassen einer Düsengeometrie eines verwendeten Extruders beliebige kontinuierliche Formen extrudiert werden können. Die geschmolzene Extrusionsmasse kann im flüssigen Zustand weiterverarbeitet werden. Denkbar sind ein Prägen, Spritzgießen, Stanzen, Warmwalzen und Pressen. Der geschmolzene Ausgangsstoff 18 wird dabei in einem heißen Werkzeug oberhalb des Schmelzpunkts des Ausgangsstoffs 18 verarbeitet. Um hinreichende Formstabilität des geschmolzenen Ausgangsstoffs 18 zu erreichen, kann die Oberfläche des Ausgangsstoffs 18 im Werkzeug bei erhöhten Temperaturen zu einem Duroplasten vernetzt werden. Als weitere Weiterverarbeitung ist ferner ein Laminieren denkbar, wobei dies insbesondere für große oder hinterschnittene Bauteile gilt. Aufgrund der beschriebenen Formgebung 24 kann das Keramikelement nicht nur als Lagerinnenring sondern auch als durchbohrter Wälzkörper oder Käfig ausgebildet sein. Eine Formstabilität des durch die Formgebung 24 zu einem Formkörper geformten Ausgangsstoffs 18 wird durch Abkühlen erreicht. Die beschriebene Formgebung 24 ermöglicht eine endformnahe Fertigung bei niedrigen Temperaturen und geringem Materialverschleiß in Bearbeitungswerkzeugen. Durch kontinuierliche Verfahren wie Spritzgießen oder Extrudieren wird eine Serienanwendung ermöglicht. Ferner wird durch den hohen volumenprozentualen Anteil des genannten Methylsilikonharzes an dem Ausgangsstoff 18 eine geringe Abrasion von Werkzeugen sowohl beim Spritzgießen als auch bei der Extrusion und der folgenden Konturgebung erreicht.

Danach wird der Formkörper abgekühlt und anschließend in einem Druckofen unter Luftdruck bei erhöhten Temperaturen durch eine Vernetzung 26 vernetzt. Für polykondensativ vernetzende Teile muss ein atmosphärischer Überdruck angewandt werden, um Blasenbildung durch entweichende Gase zu verhindern. Beim Vernetzen wird der Schmelzbereich des Formkörpers durchlaufen.

Danach erfolgt bei einem ersten Pyrolyseschritt 28 bei Temperaturen von 250 °C bis 800 °C ein Organikausbrand und eine Pyrolyse von anorganischen Rückständen.

Bei einem zweiten Pyrolyseschritt 30 findet danach die Umsetzung des Formkörpers zum keramischen Körper statt, und zwar während einer Pyrolyse unter Stickstoffdruck bis fünf Megapascal bei Temperaturen bis 1500 °C, wobei bis 1000 °C alle organischen Anteile entfernt werden und bis 1500 °C ein nahezu vollständig dichtes Keramikkomposit entsteht. Aufgrund der geringen Temperaturen und der Vermeidung von Hilfsstoffen ergibt sich eine nur sehr geringe an der Oberfläche des Keramikkomposits befindliche Reaktionsschicht, die kostengünstig entfernt wird. Die Reaktionsschicht ist insbesondere dünn im Vergleich zu einer Sinterhaut, welche bei Standardkeramiken entfernt werden muss. Nachfolgend findet ein Endkonturschleifen 32 statt, wodurch ein geschliffenes Teil entsteht.

Durch mechanische Oberflächenbehandlung, wie Kugelstrahlen, Rollieren, Suspensions- oder Injektorverfestigungsstrahlen, können infolge der Erzeugung von Druckeigenspannungen in der Randschicht die statische und zyklische Festigkeit sowie die Verschleißbeständigkeit gesteigert werden.

An das geschliffene Teil kann das Bauelement 14, welches als Kunststoffelement 20 ausgebildet ist, angespritzt werden. Nachfolgend wird an dem geschliffenen Teil eine Laufbahn geschliffen, so dass das als Lagerinnenring ausgebildete Keramikelements hergestellt ist.

Die Vickershärte HV(10) des Keramikelements liegt zwischen 8 und 14 Gigapascal. Diese Vickershärte und die thermischen und elektrischen Eigenschaften des Keramikelements können durch die Zusammensetzung des Ausgangsstoffs 18 aus seinen drei Bestandteilen eingestellt werden. Das Keramikkomposit weist die gleiche Härte auf. Aufgrund der genannten Härte kann bei einer Endbearbeitung ein geringer Verschleiß von Schleifmitteln erreicht werden und es können kostengünstige Werkstoffe für die Hartbearbeitungswerkzeuge verwendet werden. Beispielsweise kann statt Diamant Borcarbid benutzt werden.

Ausführungsbeispiele umfassen so ein Granulat, welches für das serienmäßige bzw. serientaugliche Spritzgießen und Extrudieren von Polycerbauteilen geeignet ist. Mit Hilfe eines Ausführungsbeispiels eines Granulats sowie eines Verfahrens zur Herstellung von Bauelementen mittels Spritzgießen oder Extrudierens können so beispielsweise Wälzlager bzw. Wälzlagerkomponenten, also beispielsweise Wälzkörper, Ringe, jedoch auch Gleitlager, Gleitringdichtungen, Fadengreifer für die Textilindustrie und andere Komponenten hergestellt werden. Ausführungsbeispiele von Keramikelementen können so beispielsweise im Bereich der Automobilindustrie, beispielsweise für Lastkraftwagen, aber ebenso im Bereich der Dichtungstechnik eingesetzt werden. Ebenso können sie im Bereich der Herstellung von Pumpen, Werkzeugmaschinen, aber auch bei Anwendungen im Seewasserbereich, der chemischen Industrie und bei Windkraftanlagen Verwendung finden, um nur einige wenige Beispiele zu nennen.

Ausführungsbeispiele können so eine Serienfertigung für zu extrudierende oder spritzgegossene Polycerbauteile ermöglichen. Gegebenenfalls können die spritzgegossenen oder extrudierten Bauteile als quasi vernetzte Kunststoffteile zum Einsatz kommen. Die Verwendung eines Polycer-Granulats gemäß einem Ausführungsbeispiel kann hierbei gegebenenfalls eine Herstellung der betreffenden Bauteile vereinfachen und so zu einer höheren Serienausbeute beitragen. Das Granulatprodukt kann hierbei eine definiertere Zusammensetzung aufweisen.

Die in der vorstehenden Beschreibung, den Ansprüchen und den Zeichnungen offenbarten Merkmale können sowohl einzeln, wie auch in beliebiger Kombination für die Verwirklichung eines Ausführungsbeispiels in ihren verschiedenen Ausgestaltungen von Bedeutung und implementiert sein.

### Bezugszeichenliste

| | |
|---|---|
| 10 | Keramikelement |
| 14 | Bauelement |
| 16 | Welle |
| 18 | Ausgangsstoff |
| 20 | Kunststoffelement |
| 22 | Lauffläche |
| 24 | Formgebung |
| 26 | Vernetzung |
| 28 | Pyrolyseschritt |
| 30 | Pyrolyseschritt |
| 32 | Endkonturschleifen |
| S100 | Start |
| S110 | Bereitstellen eines Gemenges |
| S120 | Umwandeln des Gemenges |
| S130 | Ende |

## Patentansprüche

1. Keramikelement, insbesondere Keramiklagerelement,
**dadurch gekennzeichnet, dass**
30 bis 70 Volumenprozent des Keramikelements (10) aus FeSiCr bestehen.

2. Keramikelement nach Anspruch 1, wobei Null bis 25 Volumenprozent des Keramikelements (10) aus SiC bestehen.

3. Keramikelement nach einem der Ansprüche 1 oder 2, wobei 30 bis 45 Volumenprozent des Keramikelements (10) aus Siliziumoxycarbid bestehen.

4. Keramikelement nach einem der vorherigen Ansprüche, wobei das Keramikelement (10) wenigstens eine Durchgangsöffnung aufweist.

5. Vorrichtung mit einem Keramikelement nach einem der vorherigen Ansprüche, wobei die Vorrichtung wenigstens ein Bauelement (14) aufweist, welches wenigstens teilweise frei von Keramik ist und welches einstückig mit dem Keramikelement (10) ausgebildet ist.

6. Vorrichtung nach Anspruch 5, wobei das Keramikelement (10) als Lagerinnenring ausgebildet ist und das Bauelement (14) ein Trägerelement ist, mittels welchem der Lagerinnenring an einer Welle (16) der Vorrichtung befestigt ist.

7. Verfahren zur Herstellung eines Keramikelements (10), insbesondere eines Keramikelements (10) nach einem der Ansprüche 1 bis 5, bei welchem ein Ausgangsstoff (18), welcher durch das Verfahren zu dem Keramikelement (10) verarbeitet wird, zu 20 bis 60 Volumenprozent aus FeSiCr besteht.

8. Verfahren nach Anspruch 7, wobei der Ausgangsstoff (18) zu Null bis 25 Volumenprozent aus SiC besteht.

9. Verfahren nach einem der Ansprüche 7 oder 8, wobei der Ausgangsstoff (18) zu 35 bis 70 Volumenprozent aus einem Silikonharz besteht.

10. Verfahren nach einem der Ansprüche 7 bis 9, wobei der Ausgangsstoff (18) frei von Katalysatoren ist.

11. Verfahren nach einem der Ansprüche 7 bis 10, wobei der Ausgangsstoff (18) zunächst geschmolzen wird und danach extrudiert wird oder durch Spritzgießen weiterverarbeitet wird oder durch Pressen mit gleichzeitiger und von mehreren Seiten erfolgender Wärmeübertragung auf den geschmolzenen Ausgangsstoff weiterverarbeitet wird.

12. Verfahren zur Herstellung einer Einheit mit einem Keramikelement (10), bei welchem zunächst ein Keramikelement durch ein Verfahren nach einem der Ansprüche 7 bis 11 hergestellt wird und anschließend ein Kunststoffelement (20) an das Keramikelement (10) angespritzt wird.

13. Ausgangsstoff (18) zum Herstellen eines Keramikelements (10), der im Durchschnitt 20 bis 60 Volumenprozent FeSiCr, bis zu 25 Volumenprozent SiC und 35 bis 70 Volumenprozent eines Kunststoffs, beispielsweise eines Silikonharzes oder eines Methylsilikonharzes, umfasst, wobei der Ausgangsstoff (18) in Form eines Granulats vorliegt.

14. Ausgangsstoff (18) nach Patentanspruch 13, bei dem im Wesentlichen jedes Korn des Granulats FeSiCr, SiC und den Kunststoff umfasst.

15. Verfahren zum Herstellen des Ausgangsstoffs (18) in Form eines Granulats, umfassend:
Bereitstellen eines im Wesentlichen homogen durchmischten Gemenges, das FeSiCr und SiC in granularer Form mit einer vorbestimmten maximalen Korngröße umfasst, das in einem Kunststoff, beispielsweise einem Silikonharz oder einem Methylsilikonharz, in einer fließfähigen Form aufgenommen ist; und
Umwandeln des in der flüssigen Form des Kunststoffs aufgenommen Gemenges in das Granulat derart, dass das Granulat eine vorbestimmte Granulatkomgröße umfasst, die die vorbestimmte maximale Korngröße übersteigt.
